# EUROPEAN PATENT APPLICATION

(11) **EP 4 213 313 A1**
(43) Date of publication of application: **19.07.2023**
(21) Application number: 22151886.3
(22) Date of filing: 17.01.2022
(51) Int. Cl.: H01R 13/62, H01R 13/44, H01R 13/703, H01R 13/53

(54) **MAGNETIC ELECTRICAL PLUG INTERFACE**

(71) Applicant: Carrier Corporation, Palm Beach Gardens, FL 33418 (US)
(72) Inventor: CHAPEAU, Lucas, 76230, Isneauville (FR)
(74) Representative: Dehns

(57) **Abstract**

A magnetic electrical plug interface for charging a transport refrigeration unit, TRU, is described herein.

The magnetic electrical plug interface (100; 300) comprises a first electrical connector (1) and a second electrical connector (2). The first electrical connector (1) comprises: a socket (10) having a closed end and an open end; a first magnetic body (13) comprising a first electrical contact (14), wherein the first magnetic body (13) is slidable in the socket (10); a resilient biasing element (12a; 12b; 12c) configured to bias the first magnetic body (13) towards the closed end of the socket (10); and a second electrical contact (15) fixed towards the open end of the socket (10). The second electrical connector (2) comprises: a second magnetic body (23) comprising a third electrical contact (29). In an unplugged configuration in which the first electrical connector (1) is disengaged from the second electrical connector (2), the resilient biasing element (12a; 12b; 12c) is configured to maintain a separation between the first electrical contact (1) and the second electrical contact (2). In a plugged configuration in which the first electrical connector (1) is engaged to the second electrical connector (2), at least one of the first magnetic body (13) and the second magnetic body (23) is configured to be magnetically attracted to the other of the first magnetic body (13) and the second magnetic body (23), such that the first electrical contact (14) engages the second electrical contact (15).

## Description

The present invention relates to a magnetic electrical plug interface for charging a transport refrigeration unit, TRU.

As battery technology improves, the use of electrical motors and electrically-powered devices in place of petroleum-powered equivalents is increasing. For example, in cold chain logistics networks, both the use of electrically-powered transport refrigeration units (TRUs), and the use of electrically-powered vehicles to transport TRUs, is increasing.

Such devices are powered by electrical energy storage devices, which require recharging once they have dissipated their stored energy. This amounts to the recharging of electrical energy storage devices at regular intervals, particularly when used in cold chain logistics networks.

As the power supplied to the energy storage devices, usually from one or more remote charging stations, is of a high voltage, there are a number of safety concerns regarding the fast and efficient recharging of energy storage devices for electric vehicles and TRUs. Such safety concerns are starting to be recognised by safety regulators. For example, Regulation No. 100 of the Economic Commission for Europe of the United Nations, provides for the approval of vehicles with regard to specific requirements for electric power trains.

To address one or more safety concerns regarding the fast and efficient recharging of energy storage devices for electric vehicles and TRUs, and to achieve compliance with developing health and safety requirements, it is desirable to provide a device which facilitates charging whilst addressing one or more of the aforementioned problems.

Viewed from a first aspect of the present invention there is provided a magnetic electrical plug interface for charging a transport refrigeration unit, TRU. The magnetic electrical plug interface comprises: a first electrical connector comprising: a socket having a closed end and an open end; a first magnetic body comprising a first electrical contact, wherein the first magnetic body is slidable in the socket; a resilient biasing element configured to bias the first magnetic body towards the closed end of the socket; and a second electrical contact fixed towards the open end of the socket; a second electrical connector comprising: a second magnetic body comprising a third electrical contact; wherein, in an unplugged configuration in which the first electrical connector is disengaged from the second electrical connector, the resilient biasing element is configured to maintain a separation between the first electrical contact and the second electrical contact; and wherein, in a plugged configuration in which the first electrical connector is engaged to the second electrical connector, at least one of the first magnetic body and the second magnetic body is configured to be magnetically attracted to the other of the first magnetic body and the second magnetic body, such that the first electrical contact engages the second electrical contact.

By providing a resilient biasing element configured to maintain a separation between the first electrical contact and the second electrical contact when in an unplugged configuration, there is no electrical contact, or flow path, established between the two contacts. The insulating air gap provided between the two contacts thus results in the second electrical contact being electrically isolated. Given that the second electrical contact is located towards the open end of the socket, the only exposed electrical contact of the first electrical connector is hence safe to touch. Safety of the first electrical connector, when being handled in the unplugged configuration, is thus improved. This is particularly important in high voltage applications, such as the charging of TRUs, where high voltages could cause arcing or pose a serious risk of electrical shock.

By also providing a first magnetic body in the first electrical connector and a second magnetic body in the second electrical connector, however, it is still possible to establish an electrical flow path across the magnetic electrical plug interface. As the first and second magnetic bodies are placed in close proximity to one another, such as in the plugged configuration, magnetic attraction experienced by at least one of the magnetic bodies motivates them towards one another. The magnetic attraction experienced in the plugged configuration is greater than the restoring force otherwise acting on the first magnetic body due to extension of the resilient biasing element. As the first magnetic body comprises the first electrical contact, and as the first magnetic body is slidable within the socket, this results in the first electrical contact being urged into contact with the second electrical contact. Hence an electrical flow path can be established, but due to the restoring force provided by the resilient biasing element, only in the plugged configuration. As such the exposure of otherwise exposed electrically live surfaces of electrical contacts of the magnetic electrical plug interface is reduced, and safety of the magnetic electrical plug interface may be improved.

In the plugged configuration, the second electrical contact is preferably adjacent to and in electrical communication with each of the first electrical contact and the third electrical contact. As such, the electrical flow path is provided directly through the adjacent electrical contacts of each of the first and second electrical connectors, without the need for intermediary components.

The term 'magnetic body' as used herein will be understood to mean both an object consisting of a material that is either permanently magnetised, or a material that is magnetised when subjected to an external magnetic field. Thus, to experience a magnetic attraction between the first magnetic body and the second magnetic body, in one arrangement one of the first magnetic body and the second magnetic body will be a permanent magnet, the other magnetic body being a body that is magnetised when subjected to the magnetic field of the permanent magnet. In an alternative arrangement, both the first magnetic body and the second magnetic body will be permanent magnets.

As mentioned above, the resilient biasing element is configured to bias the first magnetic body towards the closed end of the socket. When the resilient biasing element is extended, or wherein there is an extension of the resilient biasing element, the resilient biasing element will experience a spring force, or elastic force, which accordingly biases the first magnetic body towards the closed end of the socket. It will be appreciated that an extension of the resilient biasing element includes any deviation in its path length, which results in the generation of a restoring force arranged to restore the separation between the first electrical contact and the second electrical contact.

The closed end of the socket may be regarded as an end which is not configured to engage the second connector. That is, it may be regarded as an end of the socket which is closed. The open end of the socket may be regarded as an end which is configured to engage the second connector, and hence it may be regarded as an end of the socket which is open. In other words, the closed end may be regarded as a first end which is not configured to engage the second connector; and the open end of the socket may be regarded as a second end which is configured to engage the second connector.

The first electrical connector and the second electrical connector may engage one another via any suitable engagement. For example, one of the first electrical connector and the second electrical connector may comprise a male electrical connector, with the other comprising a female electrical connector. The first electrical connector and the second electrical connector may hence engage one another via an interference fit.

Alternatively, the first electrical connector and the second electrical connector may simply abut one another. That is, the magnetic attraction between the first magnetic body and the second magnetic body may be sufficient for the first electrical connector to remain in engaging contact with the second electrical connector via no more than merely abutting one another.

Fastening means or securing means may also be used, in addition to any of the aforementioned engagement configurations, to further retain the first electrical connector and the second electrical connector in the plugged configuration. Preferably, the fastening means or securing means are readily releasable, or comprise fast-release mechanisms.

The first electrical connector preferably comprises a first electrical cable extending through the closed end of the socket and connected to the first electrical contact. The first electrical cable provides an electrical flow path between e.g. a power source used for charging a TRU and the first electrical contact, and maintains such a flow path irrespective of a position of the first electrical contact within the socket.

The first magnetic body preferably comprises a central channel, and hence may be a first annular magnetic body. A longitudinal axis of the annular magnetic body may be parallel with a longitudinal axis of the socket. The first electrical cable preferably passes through the central channel of the first magnetic body, and is fixed to, or terminates at, the first electrical contact. The first electrical contact is preferably mounted on the first magnetic body towards the open end of the socket, such that it is adjacent to the second electrical contact when in the plugged configuration.

The first electrical cable comprises an electrically conducting core, preferably insulated by a sheath of non-conductive material. Preferably, the only conducting components within the first electrical connector are: the first electrical cable, particularly the conducting core thereof; the first electrical contact; and the second electrical contact. The remaining components are preferably formed of electrically insulating materials, or are encapsulated in an insulating material. As such, a risk of arcing or electrical shock from handling the first electrical connector is reduced.

The first electrical cable may comprise a region of slack at least in the unplugged configuration, preferably located towards the closed end of the socket. The region of slack may facilitate sliding engagement of the first magnetic body, such that the first electrical contact may readily slide towards, and contact, the second electrical contact in the plugged configuration.

The resilient biasing element may comprise a first end and a second end. The first end may be located towards, i.e. facing towards, the closed end of the socket. The second end may be located towards, i.e. facing towards, the open end of the socket.

The first end of the resilient biasing element may be fixed towards the closed end of the socket; and the second end of the resilient biasing element may be attached to the first magnetic body. The first magnetic body may be configured to stretch the resilient biasing element when actuated, such that a restoring force is generated by the resilient biasing element.

As the second end of the resilient biasing element is attached to the first magnetic body, it will be appreciated that sliding motion of the first magnetic body away from the resilient biasing element extends the resilient biasing element via a stretching motion. That is, sliding of the first magnetic body towards the second electrical contact will increase an overall length of the resilient biasing element due to the first end of the resilient biasing element remaining statically fixed towards the closed end of the socket. This stretching results in the restoring force being generated.

The first end of the resilient biasing element may be fixed to an intermediate wall (e.g. a backboard). The intermediate wall may be located closer to the closed end of the socket. Alternatively the first end of the resilient biasing element may be configured to fit to an inner surface of the socket via a threaded engagement.

The second end of the resilient biasing element may be fixed to the first magnetic body using any appropriate means. For example, the second end of the resilient biasing member: may be fixed to the first magnetic body using an adhesive; may be received by a bore or groove located in the first magnetic body; may be fixed by a fastening means such as a threaded member and a bolt; or any combination of the above.

The first electrical cable preferably passes centrally through the resilient biasing element, such that extension of the resilient biasing element is less likely to trap or pinch the first electrical cable, and cause damage to it. In arrangements where an intermediate wall is provided, the first electrical cable also preferably passes through a central opening formed in the intermediate wall, prior to passing centrally through the resilient biasing element.

In an alternative arrangement, the second end of the resilient biasing element may be fixed towards an open end of the socket; and the first end of the resilient biasing element may be fixed to the electrical cable. The first magnetic body may be configured to pull the electrical cable towards the open end when actuated and thereby compress the resilient biasing element, such that a restoring force is generated by the resilient biasing element.

As the first end of the resilient biasing element is attached to the first electrical cable, which is in turn connected to the first electrical contact, it will be appreciated that the first end of the resilient biasing element is in mechanical communication with the first magnetic body. Thus, sliding motion of the first magnetic body away from the resilient biasing element will extend the resilient biasing element via a compressing motion. That is, sliding of the first magnetic body towards the second electrical contact will decrease an overall length of the resilient biasing element due to the second end of the resilient biasing element remaining statically fixed towards the open end of the socket. This compression results in the restoring force being generated.

The second end of the resilient biasing element may be fixed to an intermediate wall (e.g. a backboard). The intermediate wall may be located closer to the closed end of the socket. The intermediate wall, in this configuration, may act as a stopper to restrict a range of motion of the first magnetic body within the socket. Alternatively, the second end of the resilient basing element may be configured to fit to an inner surface of the socket via a threaded engagement.

The first end of the resilient biasing element may be fixed to the first electrical cable using any appropriate means. For example, the first end of the resilient biasing member may comprise one or more features for providing an interference fit between the first electrical cable and itself. In other examples, the first end of the resilient biasing member may be fixed to the first electrical cable using a bracket, or an adhesive. Any combination of the aforementioned fixing means is also envisaged.

The first electrical cable preferably passes centrally through the resilient biasing element, such that extension of the resilient biasing element is less likely to trap or pinch the first electrical cable, and cause damage to it. In arrangements where an intermediate wall is provided, the first electrical cable also preferably passes through a central opening formed in the intermediate wall, after passing centrally through the resilient biasing element.

The resilient biasing element may be a helical spring. The helical spring may comprise any outer diameter, wire diameter, free length, number of coils, and be formed of any suitable material as necessary to be able to function as the resilient biasing element.

In a further alternative arrangement, the resilient biasing element may be a spring-loaded winding mechanism located in the socket. The first electrical cable may be at least partially wound around the spring-loading mechanism; and the first magnetic body may be configured to pull the electrical cable towards the open end when actuated and therefore rotate the spring-loaded winding mechanism, such that a restoring force is generated by the spring-loaded winding mechanism.

As the first electrical cable is at least partially wound around the spring-loaded mechanism, and as the first electrical cable is fixed to the first electrical contact, the spring loaded winding mechanism is in mechanical communication with the first magnetic body. Thus, sliding motion of the first magnetic body away from the spring-loaded winding mechanism will result in the first electrical cable from unwinding from the spring-loaded winding mechanism and thus rotating the spring-loaded winding mechanism. Winding of the spring-loaded winding mechanism results in the spring within the spring-loaded winding mechanism extending via a rotating or coiling motion. That is, sliding of the first magnetic body towards the second electrical contact will cause a tensioning of the spring within the spring-loaded winding mechanism. This tensioning results in the restoring force being generated.

The spring-loaded winding mechanism may comprise a torsion spring, a constant force spring, an elastic member or the like. The spring member may be located within a housing, bobbin, or other suitable other component configured to enable reeling of the first electrical cable. The first electrical cable is preferably wound at least partially around the housing, bobbin or the like.

The spring-loaded mechanism is preferably mounted about a rod, axle or other means by which the spring-loaded mechanism may be rotationally fixed in the socket.

The electrical cable may be at least partially fixed to the spring-loaded mechanism, for example via a looping feature, an adhesive, or other appropriate fastening means. Fixing the electrical cable to the spring-loaded mechanism may prevent slipping of the first electrical cable with respect to the spring-loaded mechanism, such that the restoring force is efficiently transferred to the first magnetic body via the first electrical cable.

In the plugged configuration, the first electrical connector is preferably configured to readily disengage from the second electrical connector when pulled in a disengagement direction to the second electrical connector.

By configuring the first electrical connector and the second electrical connector to readily disengage from one another when pulled in respective disengagement directions, damage to the magnetic electrical plug interface may be avoided when, for example, a vehicle or device connected to one of the electrical connectors is moved with respect to an additional device connected to the other electrical connector whilst the magnetic plug interface is still in the plugged configuration. This is of particular concern for electric vehicles, wherein a vehicle connected to e.g. the second connector may drive away from a power source connected to e.g. the first connector. The motive force generated by the vehicle may cause damage to the power source, the magnetic electrical plug interface, or itself, if the magnetic electrical plug interface is not configured to readily disengaged when the first electrical connector and the second electrical connector are pulled in respective disengaging directions.

A disengaging direction will be understood to be any direction which readily causes disengagement of the first electrical connector to the second electrical connector, and vice versa. For example, the disengagement directions can include directions in which the first electrical connector is pulled away from the second electrical connector and vice versa; the first electrical connector being pulled in an antagonistic direction to the second electrical connector and vice versa; or any other like direction which results in disengagement of the magnetic electrical plug interface.

The ready disengagement of the magnetic electrical plug interface is also of reduced safety concern in regards to flailing electrical connectors, because upon disengagement of the second electrical connector, the resilient biasing element will restore the separation between the first electrical contact and the second electrical contact. In this manner, ready disengagement of the magnetic electrical plug interface may be of reduced or no safety concern to personnel or equipment in the vicinity of the magnetic electrical plug interface, because the exposed second electrical contact is not electrically live upon disengagement.

The first electrical connector and/or the second electrical connector may comprise no fastening means to maintain engagement of the first electrical connector to the second electrical connector, and vice versa. The first electrical connector and the second electrical connector may be configured to engage via a non-fastened, or non-secured, mating. Magnetic attraction between the first magnetic body and the second magnetic body, and/or a unidirectional sliding engagement between the first electrical connector and the second electrical connector, may be configured to retain the magnetic electrical plug interface in the plugged configuration. In this way, no securement or fastening means which may prevent ready disengagement of the magnetic electrical plug interface, are necessary.

The socket and the second electrical contact may encapsulate the first electrical contact. The second electrical contact may seal the open end of the socket, such that the first electrical contact is located completely within the socket.

By preventing access to the first electrical contact in its entirety, safety when handling the first electrical connector may be improved. Additionally, the first electrical connector may be made more robust as the first electrical contact is protected from environmental conditions which could otherwise degrade the electrical contact.

The socket may comprise a recess defined between the second electrical contact and the open end. The second electrical contact may be located within the socket, such that a diameter of the recess is completely bounded by the socket. A depth of the recess may be defined between the open end of the socket and the second electrical contact.

Preferably, a diameter of the recess is much greater than a depth of the recess. For example, a ratio of the diameter to the depth of the recess may be at least: 2:1; 3:1; 4:1; or 5:1.

The recess will be understood as being configured to receive the second electrical connector. The recess may be configured to provide an interference fit which may help retain the magnetic electrical plug interface in the plugged configuration. Further, the recess may provide a locating feature to assist with engaging the second electrical connector to the first electrical connector, and vice versa.

Each of the first magnetic body and the second magnetic body may be formed of a non-conductive material; and each of the first electrical contact and the third electrical contact may comprise a conductive material located on the first magnetic body and the second magnetic body respectively.

The second electrical connector may comprise a cap defining a hollow in which the second magnetic body is located. Preferably, the second magnetic body is located completely within the cap.

The cap comprises a closed end and an open end. The third electrical contact is located towards the open end, such that the third electrical contact may readily engage the second electrical contact. Thus the open end of the cap may be regarded as an end of the cap which is configured to engage the first electrical connector. Conversely, the closed end of the cap may be regarded as an end of the cap which is not configured to engage the first electrical connector.

The second electrical connector preferably comprises a second electrical cable connected to the third electrical contact, the second electrical cable extending through the closed end of the cap. The second electrical cable provides an electrical flow path between the third electrical contact and, for example, the TRU, or an energy storage device thereof.

The second magnetic body preferably comprises a central channel, and hence may be a second annular magnetic body. A longitudinal axis of the annular magnetic body may be parallel with a longitudinal axis of the cap. The second electrical cable preferably passes through the central channel of the second magnetic body, and is fixed to, or terminates at, the third electrical contact. The third electrical contact is preferably mounted on the second magnetic body towards the open end of the cap, such that it is adjacent to the second electrical contact when in the plugged configuration.

The second electrical cable comprises an electrically conducting core, preferably insulated by a sheath of non-conductive material. Preferably, the only conducting components within the second electrical connector are: the second electrical cable, particularly the conducting core thereof; and the third electrical contact. The remaining components, such as the cap, are preferably formed of electrically insulating materials, or are encapsulated in an insulating material. As such, a risk of arcing or electrical shock from handling the second electrical connector, particularly in the plugged configuration, may be reduced.

The third electrical contact may protrude from the hollow; and the recess may be configured to receive the third electrical contact. In this respect, the second electrical connector may be considered to be a male electrical connector, and the first electrical connector may be considered to be a female electrical connector. The protrusion depth of the third electrical contact will be understood to be sized so as to always be in contact with the second electrical contact, when the second electrical connector engages the first electrical connector.

The recess may comprise a concave, or rounded, profile. The third electrical contact may comprise a concave, or rounded profile. The profile of the recess is preferably complementary to the profile of the third electrical contact. Providing rounded profiles may facilitate engagement and/or disengagement of the magnetic electrical plug interface, as the rounding of the respective profiles provides a feature which guides the third electrical contact into/out of the recess.

The third electrical contact preferably comprises a diameter much greater than its protrusion depth. For example, a ratio of the diameter to the protrusion depth may be at least: 2:1; 3:1; 4:1; or 5:1. Preferably, the protrusion depth of the third electrical contact and/or the diameter of the third electrical contact are sized so as to be fully encapsulated by the cap and the socket, when the third electrical contact is received in the recess.

As the recess and/or the protruding portion of the third electrical contact is shallow (i.e. its depth is significantly smaller than its width or diameter), a longitudinal distance required to remove the second electrical connector from the first electrical connector, before it can move laterally, is reduced. In other words, owing to a minimised or reduced surface area of any lateral contact faces between the first electrical connector and the second electrical connector, the mating engagement of the first electrical connector and the second electrical connector does not greatly resist lateral forces in such a way that could damage the magnetic electrical plug interface. This facilitates disengagement of the second electrical connector from the first electrical connector when either connector is pulled in a direction which results in disengagement to the other.

The magnetic electrical plug interface may hence readily disengage, or move from the plugged configuration to the unplugged configuration, such as when a vehicle comprising the TRU may drive away without having previously unplugged the connectors from one another.

In the plugged configuration, the socket and the cap may encapsulate each of the first electrical contact, the second electrical contact and the third electrical contact. That is, in the plugged configuration, mating engagement between the socket and the cap may result in no surfaces of the electrical contacts being accessible and/or exposed.

By fully encapsulating each of the first, second and third electrical contacts in the plugged configuration, accidental contact with live electrical contacts by a user or handler of the magnetic electrical plug interface is mitigated.

The magnetic electrical plug interface may comprise an outlet comprising a plurality of first electrical connectors, wherein each of the first electrical connectors are located within a first housing. The magnetic electrical plug interface may also comprise an inlet comprising a plurality of second electrical connectors, wherein each of the second electrical connectors are located within a second housing.

The structure and/or configuration of each of the first electrical connectors and each of the second electrical connectors is as described above. Further, although preferably each of the first electrical connectors will comprise the same resilient biasing element arrangement, first electrical connectors comprising alternative arrangements for the resilient biasing element could be provided within the same magnetic electrical plug interface.

The magnetic electrical plug interface preferably comprises three first electrical connectors, and three corresponding second electrical connectors. Each pair of first and second electrical connectors may be arranged to carry a respective phase of AC voltage.

The first housing and the second housing preferably encapsulate each of the first electrical connectors and each of the second electrical connectors in the plugged configuration. This may reduce a risk of electrical shock when handling the magnetic electrical plug interface, and may provide environmental protection to the magnetic electrical plug interface.

The first housing and the second housing are preferably made of electrically insulating materials.

The outlet may comprise an earth socket, and the inlet may comprise an earth pin. The earth pin may protrude a greater distance from the second housing than any of the third electrical contacts.

The earth socket may be connected to a first earth cable, which is connected to an electrical earth or ground. The earth socket comprises a first earth electrical contact, located within the earth socket. The first earth electrical contact defines an earth recess. The earth recess is preferably an annular recess.

The earth pin may be located in an earth cap, and may be connected to a second earth cable. The earth pin is configured to be received by the earth recess, and in doing so, provides a completed earth connection between itself and the first earth electrical contact.

As the earth pin protrudes further outwards from the second housing that any of the third electrical contacts, the earth pin and the earth socket make electrical contact before any of the first and second electrical connectors to. Accordingly, a grounded electrical connection is always connected first during engagement of the outlet to the inlet; and is always disconnected last during disengagement of the outlet to the inlet. This may further improve the safety of the magnetic electrical plug interface, as the magnetic electrical plug interface is accordingly always grounded when the inlet at least partially engages the outlet.

The earth pin preferably protrudes further from the second housing than the third electrical contacts by only a small distance. Accordingly, a diameter of the earth pin is preferably greater than a protrusion depth of the earth pin.

Certain exemplary embodiments of the invention are described below by way of example only and with reference to the accompanying drawings in which:
Figures 1A and 1B show a first magnetic electrical plug interface before and during engagement respectively;
Figures 2A and 2B show a second magnetic electrical plug interface before and during engagement respectively;
Figures 3A and 3B show a third magnetic electrical plug interface before and during engagement respectively; and
Figure 4 shows a three-phase magnetic electrical plug interface before engagement.

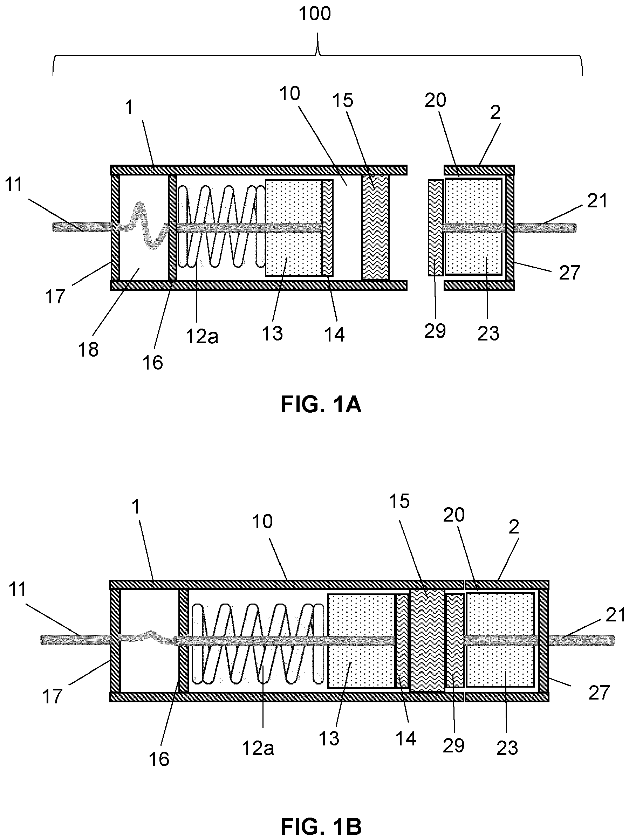

Figure 1A shows a magnetic electrical plug interface 100 in an unplugged configuration. The magnetic electrical plug interface 100 comprises a first electrical connector 1 and a second electrical connector 2. The first electrical connector 1 is connected to a power source (not shown), such as a charging station or an electrical grid, and the second electrical connector is connected to an energy storage device of a transport refrigeration unit (TRU) (not shown).

The first electrical connector 1 comprises a socket 10 through which a first electrical cable 11 passes. The first electrical cable 11 is in electrical communication with the power source. Within the socket 10 is also a resilient biasing element 12, a first magnetic body 13, a first electrical contact 14 mounted on the first magnetic body 13, and a second electrical contact 15. The first magnetic body 13 and the first electrical contact 14 are slidably mounted within the socket 10, the positions of which are maintained by the resilient biasing element 12 to be not in contact with, or spaced apart from, the second electrical contact 15, in the unplugged configuration. Whenever the resilient biasing element 12 experiences an extension due to sliding of the first magnetic body 13 and the first electrical contact 14, a spring/elastic force is generated which is arranged to restore the separation between the first electrical contact 14 and the second electrical contact 15.

The socket 10 comprises an end wall 17 located at a first end of the socket 10, with the second electrical contact 15 located towards a second end of the socket 10 opposite the first end. The second electrical contact 15 is, in the present embodiment, located within the socket 10 such that a recess is defined between the second end of the socket 10 and the second electrical contact 15. The width/diameter of the recess is much greater than the depth of the recess. The second end of the socket 10 is an open end, such that the second electrical contact 15 is accessible, or exposed, within the socket 10. The first end of the socket 10 is hence comparatively a closed end. The first electrical contact 14 is enclosed within the socket 10, located between the end wall 17 and the second electrical contact 15, such that the first electrical contact 14 is not accessible or exposed.

The first electrical cable 11 passes through an opening in the end wall 17, and is connected to the first electrical contact 14 such that the first electrical contact 14 is in electrical communication with the power source. The first electrical cable 11 passes through a bore of the first magnetic body 13, such that it can terminate at the first electrical contact 14 without obstructing a face of the first electrical contact 14. In the present embodiment, only a sheath of the first electrical cable 11, the first electrical contact 14 and the second electrical contact 15 are made of electrically conductive material. The first electrical cable 11 is preferably encased in an electrically insulating material, and the socket 10 is also preferably made of an insulating material such that handling of the first electrical connector 1 is made safer.

The second electrical connector 2 comprises a cap 20 defining a hollow in which a second magnetic body 23 is housed. A third electrical contact 29 is mounted to a face of the second magnetic body 23, facing outwards from the hollow of the cap 20. A second electrical cable 21 passes through a back wall 27 of the cap 20, through a bore in the second magnetic body 23 and terminates at, and in electrical communication with, the third electrical contact 29. The second electrical cable 21 is connected to the TRU, such that electrical communication between the third electrical contact 29 and the power source of the TRU is facilitated.

Similarly to the first electrical connector 1, only a sheath of the second electrical cable 21 and the third electrical contact 29 are made of electrically conductive material. The second electrical cable 21 is preferably encases in an insulating material, and the cap 20 is also preferably made of an insulating material, such that handling of the second electrical connector 2 is made safer.

The third electrical contact 29 protrudes outwardly from the cap 20, and hence defines a stunted pin or male portion which is complementary to the recess, or female portion, of the socket 10. The second electrical connector 2 is configured to engage the first electrical connector 1 via a mating engagement of the stunted pin and the recess of the respective connectors 2, 1. In this respect the first electrical connector 1 may be considered an electrical outlet, and the second electrical connector 2 may be considered an electrical plug configured to be received by the electrical outlet.

As shown in Figure 1A, the resilient biasing member of the present embodiment is a helical spring 12a, and is configured to maintain a separation between the first electrical contact 14 and the second electrical contact 15, when the first electrical connector 1 is in the unplugged configuration (i.e. disengaged from the second electrical connector 2).

A first end of the helical spring 12a is fixed towards the first (i.e. closed) end of the socket 10, and a second end of the helical spring 12a is fixed to the first magnetic body 13. The first end of the helical spring 12a is more specifically fixed to a backboard 16, which is located between the end wall 17 and the second electrical contact 15, within the socket 10. The first electrical cable 11 passes through an opening in the backboard 16, and longitudinally through the helical spring 12a to prevent tangling or clamping of the first electrical cable 11 within the helical spring 12a.

In the unplugged configuration there is an air gap, or a separation, between the first electrical contact 14 and the second electrical contact 15. The separation between the first electrical contact and the second electrical contact 15 is maintained by the helical spring 12a. That is, the spring 12a is configured to provide a restoring force such that, when the spring 12a experiences an extension which in the present arrangement is a stretching, the first electrical contact 14 is motivated towards the closed end of the socket 10 and away from the second electrical contact 15. As such the only exposed electrical contact, i.e. the second electrical contact 15, of the first electrical connector 1 is not in electrical communication with the power source in the unplugged configuration; and the first electrical connector is therefore made safe to handle in the unplugged configuration due to the action of the resilient biasing element 12.

A chamber 18 is defined within the socket 10, located between the end wall 17 and the backboard 16. The first electrical cable 11 is configured to gather, or bunch, within the chamber 18 in the unplugged configuration such that a region of slack is provided. The region of slack of the first electrical cable 11 is configured to become taut as the first electrical contact 14 moves. The region of slack of the first electrical cable 11 hence facilitates free movement of the first electrical contact 14, to which the first electrical cable 11 is connected. Figure 1B, comparatively, shows that the slack in the first electrical cable 11 is taken up when the first magnetic body 13 and the first electrical contact 14 slide towards, and into contact with, the second electrical contact 15.

Figure 1B shows the magnetic electrical plug interface 100 in a plugged configuration, in which the first electrical connector 1 is engaged to the second electrical connector 2. In the plugged configuration, the second electrical contact 15 is in contact with both the first electrical contact 14 and the third electrical contact 29. In this way, an electrical connection is provided between the first electrical cable 11 and the second electrical cable 21; and hence also between the power source and the TRU.

In the unplugged configuration, the spring 12a maintains a separation between the first electrical contact 14 and the second electrical contact 15 owing to a restoring force generated by the helical spring 12a, whenever it is extended. However, in the plugged configuration, the second magnetic body 23 is moved into close enough proximity with the first magnetic body 13 such that a magnetic attraction between the first magnetic body 13 and the second magnetic body 23 motivates the first electrical contact 14 into contact with the second electrical contact 15. Thus, in the plugged configuration, a magnetic attraction between the first magnetic body 13 and the second magnetic body 23 generates a sufficient force to extend the spring 12a and move the first electrical contact 14 into engagement with the second electrical contact 15. In this way, an electrical flow path between the power source and the TRU is completed.

In the plugged configuration the socket 10 and the cap 20 are configured to fully encapsulate the second electrical contact 15 and the third electrical contact 29. As such, all electrical contacts 15, 29 which are otherwise exposed in the unplugged configuration are surrounded by insulating material. Thus, as the electrical flow path through the second electrical contact 15 and the third electrical contact 29 is only completed when the second electrical connector 2 engages the first electrical connector 1, a risk of electrical shock to a user of the magnetic plug interface 100 is mitigated.

The magnetic electrical plug interface 100 also facilitates easy engagement and/or disengagement of the first electrical connector 1 from the second electrical connector 2 as necessary. For example, attraction between the first magnetic body 13 and the second magnetic body 23 as the connectors 1, 2 are moved into engagement may assist a user of the magnetic electrical plug interface 100 in moving the connectors 1, 2 into the plugged configuration. Further, as the connectors 1, 2 may be maintained in the plugged configuration owing to the magnetic attraction between the first magnetic body 13 and the second magnetic body 23, there is no need for a locking mechanism or other securement feature which needs to be engaged when connecting the connectors 1, 2 together. This may facilitate ease of engaging and disengaging the connectors 1, 2 from one another.

Additionally, as the recess located at the open end of the socket 10 is shallow (i.e. its depth is significantly smaller than its width or diameter), a longitudinal distance required to remove the second electrical connector 2 from the first electrical connector 1, before it can move laterally, is reduced.

In other words, owing to a minimised or reduced surface area of any lateral contact faces between the first electrical connector 1 and the second electrical connector 2, the mating engagement of the first electrical connector 1 and the second electrical connector 2 does not greatly resist lateral forces in such a way that could damage the magnetic electrical plug interface 100. This facilitates disengagement of the second electrical connector 2 from the first electrical connector 1 when either connector 1, 2 is pulled in a direction which causes disengagement to the other.

The magnetic electrical plug interface 100 can hence readily disengage, or move from the plugged configuration to the unplugged configuration, such as when a vehicle comprising the TRU may drive away without unplugging the connectors 1, 2 from one another. It will be appreciated that, owing to the restoring force of the helical spring 12a, when the connectors 1, 2 are disengaged the separation between the first electrical contact 14 and the second electrical contact 15 will be restored. The first electrical connector 1 is therefore capable of being readily disengaged from the second electrical connector 2; and when doing so readily returns to the unplugged configuration in which the first electrical connector 1 is safe for a user to handle.

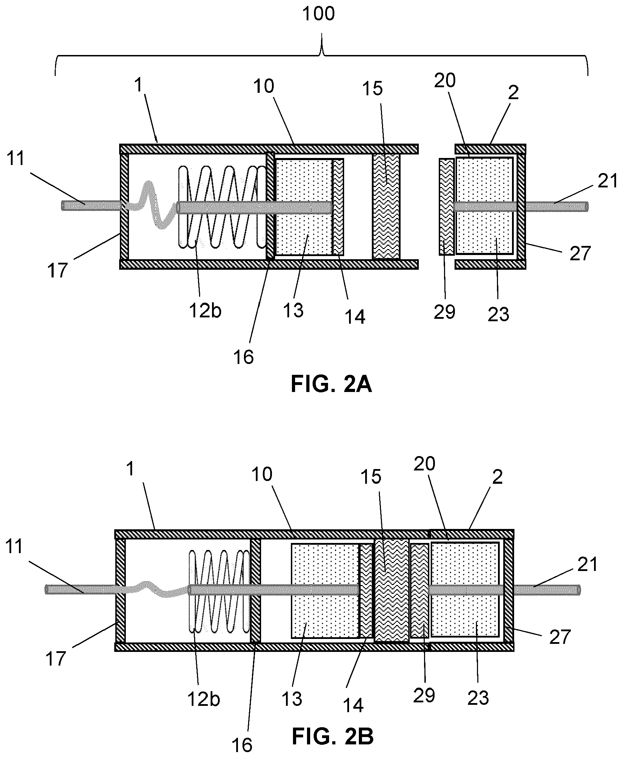

Figure 2A shows an alternative arrangement for the first electrical connector 1 in the unplugged configuration. The outer structure of the first electrical connector 1, and its engagement with the second electrical connector 2 remain the same as described above, and hence will not be repeated. However, an alternative internal arrangement of the resilient biasing element 12 is provided.

As seen in figure 2A, there is provided a resilient biasing element 12 which is a helical spring 12b, the backboard 16, and the first magnetic body 13 to which the first electrical contact 14 is mounted. However, in this configuration, the helical spring 12b protrudes from the backboard 16 towards the end wall 17 at the closed end of the socket 10.

A first end of the helical spring 12b located towards the closed end of the socket 10 is connected to the first electrical cable 12b, either directly or via an intermediate component. A second end of the helical spring 12b located towards the open end of the socket 10 is fixed to the backboard 16. The backboard 16 hence separates the helical spring 12b from the first magnetic body 13. The helical spring 12b and the first magnetic body 13, however, are in communication with one another via the electrical cable 11. Thus, when the first magnetic body 13 moves towards the second electrical contact 15 at the open end of the socket 10, the electrical cable 11 pulls the first end of the helical spring 12b towards the backboard 16. Compression of the helical spring 12b against the backboard 16 generates a restoring force, which motivates the first end of the helical spring 12b away from the backboard 16. Motion of the first end of the helical spring 12b pulls the electrical cable 11, and hence the first magnetic body 13, away from the open end of the socket 10. In this manner, the separation or air gap between the first electrical contact 14 and the second electrical contact 15 is maintained in the unplugged configuration.

Figure 2B shows the first electrical connector 1 having the alternative arrangement for the resilient biasing element 12, and the second electrical connector 2 in the plugged configuration. Magnetic attraction between the first magnetic body 13 and the second magnetic body 23 causes the first electrical contact 14 to move into contact with the second electrical contact 15, and hence complete the electric flow path between the power source and the TRU. The magnetic attraction between the first magnetic body 13 and the second magnetic body 23 is therefore greater than a restoring force generated due to compression of the helical spring 12b against the backboard 16. The separation between the first electrical contact 14 and the second electrical contact 15 will therefore only be restored when the second electrical connector 2 is disengaged from the first electrical connector 2.

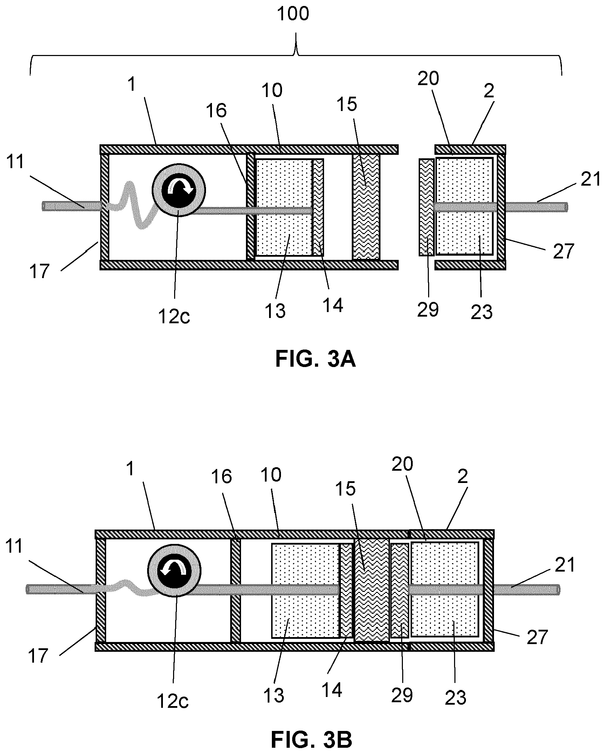

Figure 3A shows a further alternative arrangement for the first electrical connector 1 in the unplugged configuration. The outer structure of the first electrical connector 1, and its engagement with the second electrical connector 2 remain the same as described above, and hence will not be repeated. However, an alternative internal arrangement of the resilient biasing element 12 is provided.

As seen in figure 3A, there is provided a resilient biasing element 12 which is a spring-loaded winding mechanism 12c, a backboard 16 and the first magnetic body 13 to which the first electrical contact 14 is mounted. In this configuration however, the spring-loaded winding mechanism 13 is mounted to the first electrical cable 11, and is pivotally fixed within the socket 10. The spring-loaded winding mechanism 12c is located between the end wall 17 of the socket 10, and the backboard 16 located between the end wall 17 and the first magnetic body 13.

The first electrical cable 11 is wound around the spring-loaded winding mechanism 12c, and is preferably fixed to the spring-loaded winding mechanism 12c at one point or more. The first electrical cable thus extends from the end wall 17, is wound around the spring-loaded winding mechanism 12c, and extends from the spring-loaded winding mechanism 12c and through the backboard 16, where it then terminates at the first electrical contact 14.

As the first electrical contact 14 moves towards the second electrical contact 15, the first electrical cable 11 is pulled with the first electrical contact 14. This causes the first electrical cable 11 to unwind from the spring-loaded winding mechanism 12c. The spring-loaded winding mechanism 12c becomes loaded as a result, such that it creates a torque which re-winds the first electrical cable 11. Due to the spring-loaded winding mechanism 12c pulling the first electrical cable 11 back to its wound position, the first electrical contact 14 is urged away from the second electrical contact 15. The separation or air gap between the first electrical contact 14 and the second electrical contact 15 is hence maintained, in the unplugged configuration.

Figure 3B shows the first electrical connector having the alternative arrangement for the resilient biasing element 12, and the second electrical connector 2 in the plugged configuration. Magnetic attraction between the first magnetic body 13 and the second magnetic body 23 causes the first electrical contact 14 to move into contact with the second electrical contact, and hence complete the electric flow path between the power source and the TRU. The magnetic attraction between the first magnetic body 13 and the second magnetic body 23 is therefore greater than a restoring force, or torque, generated by the spring-loaded winding mechanism 23 due to winding of the spring-loaded winding mechanism 23. The separation between the first electrical contact 14 and the second electrical contact 15 will therefore only be restored when the second electrical connector 2 is disengaged from the first electrical connector 2.

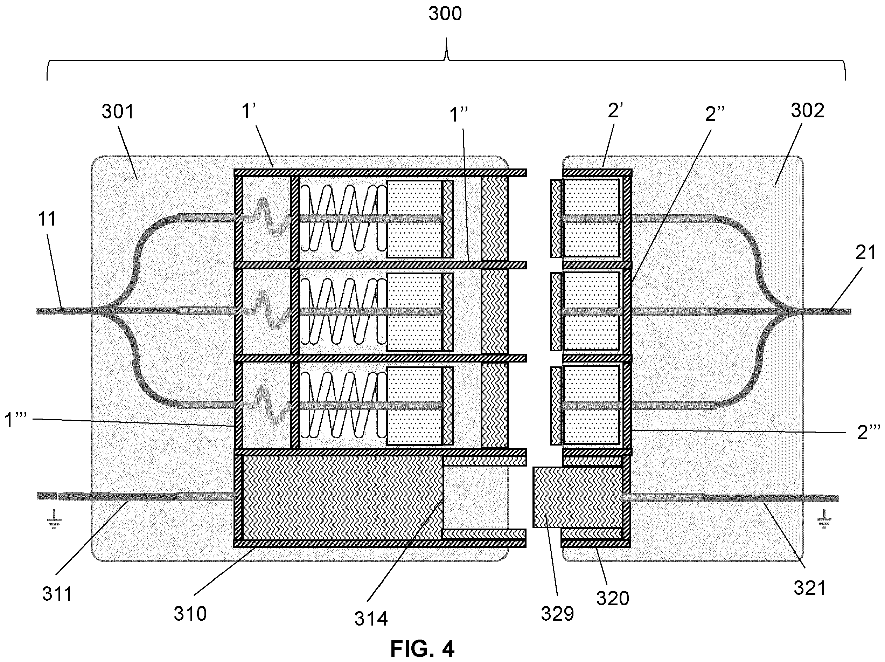

Figure 4 shows a three-phase magnetic electrical plug interface 300 in an unplugged configuration, the three-phase magnetic electrical plug interface 300 comprising an outlet 301 and an inlet 302.

The outlet 301 comprises a housing which comprises three first electrical connectors 1′, 1ʺ, 1‴. Each of the first electrical connectors 1′, 1ʺ, 1‴ are in electrical communication with the first electrical cable 11 via a respective first electrical cable 11′, 11ʺ, 11‴ carrying a respective phase of current. Each of the first electrical connectors 1′, 1ʺ, 1‴ comprises a structure identical to that as described with respect to figure 1A. However, each of the first electrical connectors 1′, 1ʺ, 1‴ could comprise an alternative arrangement to that of figure 1A and perform the same function. For example, each of the first electrical connectors 1′, 1ʺ, 1‴ could comprise a resilient biasing element 12′, 12ʺ, 12‴ as described with respect to figures 2A and 3A. The discussion of the structure of each first electrical connector 1′, 1ʺ, 1‴ will therefore not be repeated herein. In the unplugged configuration however, it will be appreciated that each of the resilient biasing elements 12′, 12ʺ, 12‴ of each of the respect first electrical connectors 1′, 1ʺ, 1‴ are configured to maintain a separation, or an air gap, between the first electrical contacts 14′, 14ʺ, 14‴ and the second electrical contacts 15′, 15ʺ, 15‴.

The inlet 302 comprises a housing which comprises three second electrical connectors 2′, 2ʺ, 2‴. Each of the second electrical connectors 2′, 2ʺ, 2‴ are in electrical communication with the second electrical cable 21 via a respective second electrical cable 21′, 21ʺ, 21‴ carrying a respective phase of current. Each of the second electrical connectors 2', 2", 2'" comprises a structure identical to that as described with respect to figures 1A, 2A and 2A.

The inlet 302 is configured to engage the outlet 301. When the inlet 302 engages the outlet 301, i.e. in a plugged configuration, magnetic attraction between the first magnetic bodies 13′, 13ʺ, 13‴ of the first electrical connectors 1′, 1ʺ, 1‴ and the second magnetic bodies 23′, 23ʺ, 23‴ of the second electrical connectors 2′, 2ʺ, 2‴ is configured motivate the first electrical contacts 14, 14ʺ, 14‴ into electrical contact with each of the respective second electrical contacts 15′, 15ʺ, 15‴. In this way, an electrical flow path is provided between a power source connected to the first electrical cable 11, and a TRU connected to the second electrical cable 21.

The outlet 301 also comprises an earth socket 310. The earth socket 310 is connected to a first earth cable 311, which is connected to an electrical earth, or ground. The earth socket comprises a first earth electrical contact 314, located within the earth socket 310. The first earth electrical contact 314 defines an earth recess 315.

The inlet 302 comprises an earth pin 329, which is located in an earth cap 320 and is connected to a second earth cable 321. The earth pin 329 protrudes further outwards from the housing of the inlet 302 than any of the third electrical contacts 29′, 29ʺ, 29‴. The earth pin 329 is configured to be received by the earth recess 315, and in doing so provides a completed earth, or ground, connection between itself and the first earth electrical contact 314.

As the earth pin 320 protrudes further outwards from the housing of the inlet 302 than any of the third electrical contacts 29′, 29ʺ, 29‴, electrical contact is established between the earth pin 329 and the first earth electrical contact 314 before any electrical flow paths can be established between the first electrical connectors 1′, 1ʺ, 1‴ and the second electrical connectors 2′, 2ʺ, 2‴. Completion of an earth electrical flow path, before any other electrical flow path, within the magnetic electrical plug interface 300 may reduce hazards associated with assembling the magnetic electrical plug interface 300. Similarly, as the earth pin 320 is longer than any of the third electrical contacts 29′, 29ʺ, 29‴, the earth electrical flow path is not disconnected until the other electrical flow paths of the magnetic electrical plug interface 300 are disconnected. This may similarly reduce hazards associated with disassembling the magnetic electrical plug interface 300. The earth pin 320 is preferably, however, only just longer than the third electrical contacts 29′, 29ʺ, 29‴, such that its protruding length is still significantly smaller than its width or diameter. Hence disengagement of the inlet 302 from the outlet 301 is still readily possible without damage to the magnetic electrical plug interface 300, including in situations where the outlet 301 and the inlet 301 are pulled apart in partially lateral directions to one another.

## Claims

1. A magnetic electrical plug interface (100; 300) for charging a transport refrigeration unit, TRU, the magnetic electrical plug interface (100; 300) comprising:
a first electrical connector (1) comprising:
a socket (10) having a closed end and an open end;
a first magnetic body (13) comprising a first electrical contact (14), wherein the first magnetic body (13) is slidable in the socket (10);
a resilient biasing element (12a; 12b; 12c) configured to bias the first magnetic body (13) towards the closed end of the socket (10); and
a second electrical contact (15) fixed towards the open end of the socket (10);
a second electrical connector (2) comprising:
a second magnetic body (23) comprising a third electrical contact (29);
wherein, in an unplugged configuration in which the first electrical connector (1) is disengaged from the second electrical connector (2), the resilient biasing element (12a; 12b; 12c) is configured to maintain a separation between the first electrical contact (14) and the second electrical contact (15); and
wherein, in a plugged configuration in which the first electrical connector (1) is engaged to the second electrical connector (2), at least one of the first magnetic body (13) and the second magnetic body (23) is configured to be magnetically attracted to the other of the first magnetic body (13) and the second magnetic body (23), such that the first electrical contact (14) engages the second electrical contact (15).

2. A magnetic electrical plug interface (100; 300) as claimed in claim 1, comprising a first electrical cable (11) extending through the closed end of the socket (10) and connected to the first electrical contact (14).

3. A magnetic electrical plug interface (100; 300) as claimed in claim 1 or 2, wherein a first end of the resilient biasing element (12a) is fixed towards the closed end of the socket (10); and
wherein a second end of the resilient biasing element (12a) is attached to the first magnetic body (13);
wherein the first magnetic body (13) is configured to stretch the resilient biasing element (12a) when actuated such that a restoring force is generated by the resilient biasing element (12a).

4. A magnetic electrical plug interface (100; 300) as claimed in claim 2, wherein a second of the resilient biasing element (12b) is fixed towards the open end of the socket (10); and
wherein a first end of the resilient biasing element (12b) is fixed to the first electrical cable (11);
wherein the first magnetic body (13) is configured to pull the first electrical cable (11) towards the open end when actuated and thereby compress the resilient biasing element (12b), such that a restoring force is generated by the resilient biasing element (12b).

5. A magnetic electrical plug interface (100; 300) as claimed in any preceding claim, wherein the resilient biasing element is a helical spring (12a; 12b).

6. A magnetic electrical plug interface (100; 300) as claimed in claim 2, wherein the resilient biasing element is a spring-loaded winding mechanism (12c) located in the socket (10);
wherein the first electrical cable (11) is at least partially wound around the spring-loading winding mechanism (12c); and
wherein the first magnetic body (13) is configured to pull the electrical cable (11) towards the open end when actuated and thereby rotate the spring-loaded winding mechanism (12c), such that a restoring force is generated by the spring-loaded winding mechanism (12c).

7. A magnetic electrical plug interface (100; 300) as claimed in any preceding claim, wherein, in the plugged configuration, the first electrical connector (1) is configured to readily disengage from the second electrical connector (2) when pulled in a disengaging direction to the second electrical connector (2).

8. A magnetic electrical plug interface (100; 300) as claimed in any preceding claim, wherein the socket (10) and the second electrical contact (15) encapsulate the first electrical contact (14).

9. A magnetic electrical plug interface (100; 300) as claimed in any preceding claim, wherein the socket (10) comprises a recess defined between the second electrical contact (15) and the open end.

10. A magnetic electrical plug interface (100; 300) as claimed in claim 8, wherein the second electrical connector (2) comprises a cap (20) defining a hollow in which the second magnetic body (23) is located;
wherein the third electrical contact (29) protrudes from the hollow; and
wherein the recess is configured to receive the third electrical contact (29).

11. A magnetic electrical plug interface (100; 300) as claimed in claim 9, wherein, in the plugged configuration, the socket (10) and the cap (20) encapsulate each of the first electrical contact (14), the second electrical contact (15) and the third electrical contact (29).

12. A magnetic electrical plug interface (100; 300) as claimed in any preceding claim, wherein, in the plugged configuration, the second electrical contact (15) is adjacent to and in electrical communication with each of the first electrical contact (14) and the third electrical contact (29).

13. A magnetic electrical plug interface (100; 300) as claimed in any preceding claim, wherein each of the first magnetic body (13) and the second magnetic body (23) are formed of a non-conductive material; and
wherein each of the first electrical contact (14) and the third electrical contact (29) comprise a conductive material located on the first magnetic body (13) and the second magnetic body (29) respectively.

14. A magnetic electrical plug interface (300) as claimed in any preceding claim, comprising:
an outlet (301) comprising a plurality of first electrical connectors (1), wherein each of the first electrical connectors (1) are located within a first housing; and
an inlet (302) comprising a plurality of second electrical connectors (2), wherein each of second electrical connectors (2) are located within a second housing.

15. A magnetic electrical plug interface (300) as claimed in claim 11, wherein the outlet (301) comprises an earth socket (310); and
wherein the inlet comprises an earth pin (329);
wherein the earth pin (329) protrudes a greater distance from the second housing than any of the third electrical contacts (29).
